# EUROPEAN PATENT APPLICATION

(11) **EP 4 803 860 A2**
(43) Date of publication of application: **09.09.2026**
(21) Application number: 26150742.0
(22) Date of filing: 08.01.2026
(51) Int. Cl.: G01C 21/00, G01C 11/02, F41G 3/02

(54) **METHODS AND DEVICES FOR OBTAINING A GEOGRAPHICAL COORDINATE FOR A POSITION ON THE GROUND**

(30) Priority: 17.01.2025 SE 2550033
(71) Applicant: Vantor Sweden AB, 582 13 Linköping (SE)
(72) Inventor: DEHLIN, Jonas, LINKÖPING (SE); SANDAHL, Patrik, LINKÖPING (SE); THORDARSON, Filip, LINKÖPING (SE); GERFORT, Oliver, LINKÖPING (SE); BRISSMAN, Emil, LINKÖPING (SE); BRÄNNEBY, Måns, LINKÖPING (SE); PETERSÉN, Elin, LINKÖPING (SE); BLACKERT, Axel, LINKÖPING (SE); EDLUND, Henric, LINKÖPING (SE); RATTFÄLT, Staffan, deceased (SE); JACKSON, Matthew, Oundle (GB); FREE, Mitch, Windsor (GB); RASMUSSEN, Andreas, LINKÖPING (SE)
(74) Representative: Zacco Sweden AB

(57) **Abstract**

The present disclosure relates to a method (200) and processing device for obtaining a geographical coordinate for a position on the ground. The method comprises determining (210) an initial pose of a video camera on-board an aerial platform, ,continuously determining (230) a pose of the video camera starting from the determined initial pose and from continuously updated video camera images and the textured 3D model of the environment, receiving (240) a request for determining a geographical coordinate for a position on the ground, said request comprising a second image from the continuously updated video images in which second image a location of the position on the ground is indicated, and determining (250) the geographical coordinate of the indicated position on the ground based on a determined pose of the video camera at the time of capture the second image, the second image and the textured 3D model of the environment.

## Description

### TECHNICAL FIELD

The present disclosure relates to devices and methods for obtaining a geographical coordinate for a position on the ground.

### BACKGROUND

Navigation of vehicles, especially aerial vehicles, is today often based on a global navigation satellite system (GNSS), like GPS. This has the advantage that the position of the vehicle using the GNSS systems is quite well known within some uncertainty.

Sometimes it may be of interest to extract information about a specific coordinate in a terrain (e.g., on the ground) while flying over the terrain. Especially if GNSS signals are not available, it is a challenge to provide such specific terrain coordinate information.

### SUMMARY

It is an object of the present disclosure to mitigate, alleviate or eliminate one or more deficiencies or disadvantages in the prior art. For example, one object of the present disclosure is to determine and provide specific terrain coordinate information in the absence, or malfunction, of a GNSS system According to a first aspect there is provided a method as defined in claim 1.

Thus, in an aspect of the disclosure herein, a coordinate system used for a video camera is a predetermined global coordinate system of the textured 3D model of an environment containing 3D coordinates. In one aspect, the predetermined coordinate system is then used in determining the geographical coordinate of the position on the ground manually marked or otherwise indicated in the second image provided from the video camera.

Note that the term "ground" herein should be interpreted broadly. The term is intended to not only include ground positions, but rather any position in the terrain, including structures such as buildings, bridges, etc., and other features in the terrain, such as vegetation.

Additional embodiments are set fourth in the dependent claims and as described in the present disclosure.

The present disclosure also relates to a processing device according to claim 16.

The embodiments of the present disclosure will become apparent from the detailed description given below. The detailed description and specific examples disclose exemplary embodiments of the disclosure. Those skilled in the art understand from guidance in the detailed description that changes and modifications may be made within the scope of the disclosure.

Hence, it is to be understood that the embodiments disclosed herein is not limited to the particular component parts of the device described or aspects of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### BRIEF DESCRIPTION OF THE DRAWING

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Fig. 1 depicts schematically an exemplary situation where embodiments of the present disclosure can be used.
Figure 2 is a flow chart illustrating example methods for obtaining a geographical coordinate for a position on the ground according to the present disclosure.
Figure 3 is a flow chart illustrating an example of determining an initial pose in the method of figure 2.
Figure 4 is a flow chart illustrating an implementation example of parts of the steps in figure 3.
Figure 5 is a flow chart illustrating an example of initialisation of a navigation filter in the method of figure 2.
Figure 6 is a block schematic illustrating exemplary configurations of a processing device for use in obtaining a geographical coordinate for a position on the ground, according to the present disclosure.
Figures 7a and 7b illustrate an example first image and extract from a textured 3D model for use in determining point correspondence.
Figure 8 illustrates an example of a textured 3D model according to the present disclosure.

### DETAILED DESCRIPTION

The present disclosure will now be described with reference to the accompanying drawings, in which exemplary embodiments of the disclosure are shown. The disclosure may, however, be embodied in other forms and should not be construed as limited to the herein disclosed embodiments. The disclosed embodiments are provided to fully convey the scope of the disclosure to the skilled person.

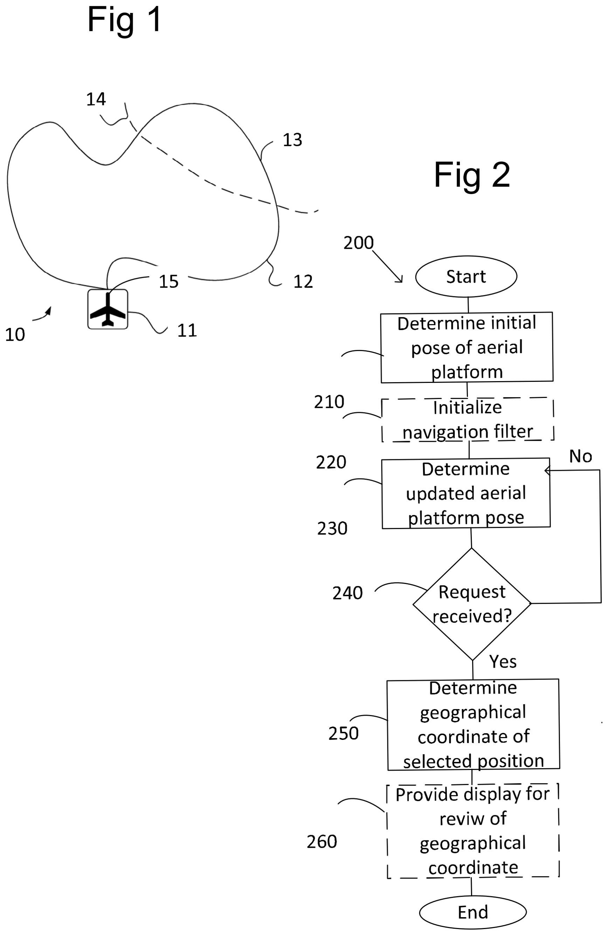

Fig. 1 depicts schematically a situation 10 where the present disclosure can be used. An aerial platform 15, here illustrated as an aerial vehicle will start at a starting point 11. The aerial vehicle can be any kind of aerial vehicle. In some examples, the aerial vehicle is an airplane or a helicopter. The aerial vehicle 15 can be manned or unmanned. In other examples, the aerial vehicle 15 is an unmanned aerial vehicle, UAV (e.g., a drone or the like). The aerial vehicle can also be an expendable aerial vehicle, which is not expected to return to the starting point 11, such as a rocket powered vehicle. In different examples, the aerial vehicle 15 can be any kind of aerial vehicle, including both a civilian and/or a military aerial vehicle.

In some examples, the aerial vehicle 15 may include a device for receiving data provided from a GNSS and means for calculating the own position based on the GNSS-data. The starting point 11 can be any kind of starting point applicable to the situation. In an example, the starting point 11 is an aerodrome like an airport, an airfield, or a rocket launch site. It can also be a mobile carrier of aerial vehicles, such as a sea-based or ground-based aircraft carrier, or the like. In an example, the starting point is a projectile launching unit for dispensing civilian packages or other items such as ordnance. In different examples, the starting point 11 can be situated on a naval unit, on a land-based unit or on an aerial unit. The aerial vehicle 15 will start from the starting point 11 and thereafter fly along a flight path 12. In the example illustrated in Fig. 1, the flight path 12 travels along a path that returns to the starting point 11. In another example the flight path 12 will terminate at a different landing point than the starting point 11. In yet another example, the flight path 12 will end at some point, for example a predetermined end point, such as a goods-delivery location or military location. The predetermined end point can be a land-based location, a water-based location or an air-based location. In some examples, the flight path 12 is pre-determined, and in other examples, the flight path 12 is not pre-determined. In an example embodiment, the flight path 12 is changed or modified during flight of the aerial platform 15.

In some examples, the aerial vehicle includes a navigation system based on a GNSS which is arranged to determine an absolute position of the aerial platform 15. This is, however, not a prerequisite of the present disclosure, and in some embodiments the aerial vehicle 15 does not include a GNSS based navigation system. The GNSS navigation system might be vulnerable to technical failures of the GNSS, intentional or unintentional service denial of the GNSS or to jamming of the GNSS. In the example illustrated in Fig. 1, the border 14 is illustrated by a dotted line that indicates a border between an area where the GNSS reliably works (e.g. the area which is below and left of line 14) and an area where the GNSS does not reliably work (e.g. the area which is above and right of the line 14).

When referring to a GNSS-denied, or GNSS unreliable, area in the present disclosure, the denial or unreliability can be due to any reason. It should not only be considered the case of intentionally denying GNSS, but also the case of GNSS denial due to technical reasons or due to any possible disturbance. The GNSS-denied area can in one example also comprise the starting point 11. In an example, the entirety of flight path 12 is located within the GNSS-denied area. In another example, one or some portions of flight path 12 are located within the GNSS-denied area. In some examples, the GNSS-denied area can also change during flight of the aerial vehicle 15.

In some examples, the aerial vehicle 15 may have some known (e.g. initial) data values for attitude and/or position of the aerial vehicle 15 before entering the GNSS-denied area. In these examples, the having the known data can be due to the navigation system which includes a GNSS and which is operational before entering the GNSS-denied area, and/or it can be due to the knowledge of position and attitude from the starting point 11 as described above. There is no requirement having access to initial values for attitude or position of the aerial vehicle 15. However, if available, this information can be used as supporting reference information in providing suitable data from a textured 3D model for use in determining point correspondence, as will be described later herein.

Embodiments of the present disclosure, as presented herein allow for obtaining a geographical coordinate for a position on the ground selected while the aerial platform 15 travels along the flight path 12. The embodiments of the present disclosure allow for extraction of accurate coordinates of locations on the ground in near real-time in a GNSS-denied environment.

Note that the term "ground" herein should be interpreted broadly. The term is intended to not only include ground positions, but rather any position in the terrain, including structures such as buildings, bridges, etc., and other features in the terrain, such as vegetation.

Figures 2-5 illustrate example methods for obtaining a geographical coordinate for a position on the ground. Exemplary methods allow for extraction of accurate coordinates in near real-time in a GNSS-denied environment. The methods are characteristically executed by a processing device, such as a special purpose computing device specifically modified or designed to accomplish the methods described herein.

As explained earlier, the aerial platform can be any kind of aerial vehicle. For example, the aerial platform may be an airplane or a helicopter. The aerial platform can be manned or unmanned. In an example, the aerial platform is an unmanned aerial vehicle, UAV. The aerial platform is for example a drone.

The aerial platform may be an aerial vehicle, which is not supposed to return to the starting point 11, like a missile or a rocket. The aerial platform can in principle be any kind of aerial vehicle, both a civilian and a military aerial vehicle.

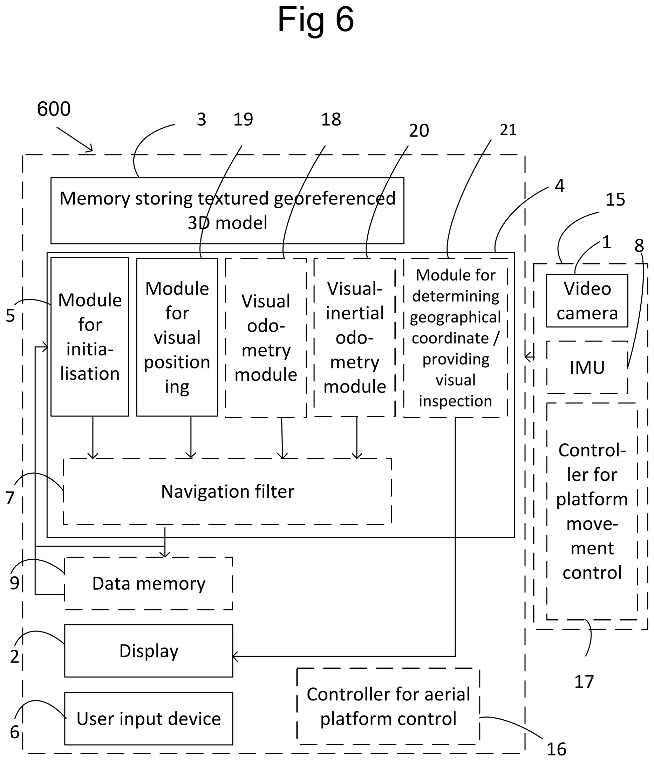

The aerial platform 15 has, as stated above an on-board video camera 1 (Figure 6). The video camera 1 is mounted to the aerial platform 15 in a fixed, single-axis- or multi-axis movable manner. The video camera 1 has a known spatial relation to the aerial platform15 (e.g., the position and mounting location of the video camera 1 is located at a pre-determined or known position on or within the aerial vehicle 15). The video camera 1 captures imagery outputs imagery data, which may be a stream of imagery data, representing a video stream. Characteristically, a field of view of the video camera 1 is known. Lens calibration parameters for the video camera 1 may also be known.

The output of the video camera 1, such as the , may be transmitted to the processing device 600 configured to execute at least some of the aspects of the methods 2-5 to obtain the geographical coordinate of a desired position on the ground, such as a user selected or automatically selected position on the ground. The processing device 600 is in some examples not provided on the aerial platform 15, and is instead located arranged at a remote location where the user is located. In other examples, the processing device 600 is located on the aerial platform 15. At least in some examples, the only external data the processing device requires from the aerial platform is the video stream from the video camera. In some examples, the video stream is transmitted from the aerial platform 15 as a live video feed. In other examples, the video stream may be transmitted from the aerial platform to the processing device with delay, or may be stored in a data memory 9 prior to being used. The video stream may be transmitted from the aerial platform 15 to the processing device compressed in time, i.e. for example a twenty-minute long video sequence may be transmitted during a substantially shorter time.

In some examples, instead of being transmitted from the aerial platform 15 to the processing device 600, for example in (near) real time during operation of the aerial platform 15, the video stream may be stored in the aerial platform 15 and loaded from the aerial platform into the processing device 600 after a flight.

Also, the field-of-view of the video camera is characteristically known. This information may be provided as a configuration parameter from any source or be actively provided by the aerial platform/video camera.

Irrespectively of how the video stream is provided from the video camera 1 to the processing device 600, a live video feed or recorded video stream can be retrieved from the aerial platform to the processing device and shown to a user using a display device, such as display 2 which may be an electronic display. The subsequent operations are carried out on the processing device, unless otherwise stated. In some examples, no additional hardware or software needs to be installed on the aerial platform 15 itself. No additional telemetry data is required to perform the operations of the present disclosure.

Figure 2 illustrates an exemplary method that includes determining 210 an initial pose of the aerial platform 15 having an on-board video camera 1. The initial pose is determined 210 from a first image of the ground obtained using the on-board video camera 1 and from a textured 3D geo-referenced model of the environment. In detail, the initial pose is determined from at least three identified visual points in the first image and from corresponding at least three identified visual points of the textured three-dimensional model of the embodiment. The initial pose represents a position and attitude of aerial platform.

In practice, the initial pose determined is a pose of the video camera. However, as the video camera is positioned (position and attitude/direction) at the aerial platform at certain, known position of the aerial platform, the initial pose of the aerial platform is inherently known form the initial pose of the video camera.

In some examples, the aerial platform 15 may be controlled to be positioned in a stable state for use in obtaining the initial pose. The stable state may for example be selected such that the video camera is looking down at the terrain and remaining relatively stationary vis-à-vis the aerial vehicle 15 (e.g., it is not rotating or translating on aerial vehicle 15). The stable state may further be a state where the aerial platform 15 is stationary, i.e. not moving. The initial pose is then determined while the aerial platform is in the stable state.

Alternatively, in some examples, the initial pose is determined 210 without controlling the aerial platform 15 to a stable state.

In order to determine 210 the initial pose, a user may view the video stream on a display 2 of the processing device 600 and then select a frame from the video stream, said frame representing the first image of the video stream. Alternatively, the first image is selected in an automated or semi-automated manner based on some selection criterion relating to desired characteristics of the first image. If desired, this may be combined with controlling the aerial platform 15 to the stable state.

Further, the processing device 600 has access to or stored thereon a memory on which a textured 3D model of an environment containing 3D coordinates given in a predetermined global coordinate system is stored.

The predetermined global coordinate system may be a geographic coordinate system. A base of the predetermined global coordinate system may be a metric base, an imperial base or the like.

In an example implementation, the memory 3 containing the textured 3D model is characteristically located together with the processing device 600. The processing device 600 may for example be a laptop computer or the like. The memory may be arranged to be uploaded with a suitable part of the textured 3D model. However, the textured 3D model may instead or in part be stored elsewhere and access is then provided via for example radio communication.

The user characteristically selects positions in the textured 3D model to show at the display 2 of the processing device 600 a similar view as the first image. Preferably, the first image and the view provided from the textured 3D model are both displayed on the display. The processing device may have an input device 6, for example a mouse, joystick or keyboard for use in adapting the view so that characteristic features of the first image are also visible in the 2D view of the textured 3D model as presented on the display 2. Alternatively, the display is a touch screen, which functions as the user input device 6, by which the user may adapt the view. For example, the view may be selected so that the view maps to the pose of the video camera when taking the first image.

The user may find the appropriate part of the textured 3D model based on the users knowledge about where in the World the first image was captured. Other or additional appropriate input data for use in finding the relevant part of the textured 3D model may for example comprise manually provided geographical coordinate information or information provided from an on-board GNSS based navigation system, or a combination thereof. The manually provided geographical coordinate information may for example include user input of coordinates via a input device 6, such as by using a key board for input of coordinate data or marking an area in a map as presented on a display 2. The map may be the textured 3D model itself or another 2D or 3D map.

Characteristically, the display 2 presents both the first image as selected and the 2D view extracted from the textured 3D model. The first image and the 2D view extracted from the textured 3D model may be presented side by side.

The selected part of the textured 3D model of the memory is extracted for use in determining point correspondence with the first image. The determination of point correspondence will be discussed further in detail below

The user may identify at least three features visible in both the first image and the extracted 2D view of the textured 3D model for use in determining point correspondences between the respective feature in the first image and its corresponding point in the displayed textured 3D model view. In an example four or more features are used for finding point correspondence. Thereby, a stable performance can be expected.

Potentially, the identification of features/points for use in determining point correspondences between the respective feature in the first image and its corresponding point in the displayed textured 3D model view can be automated at least to a certain degree.

The processing device 600 is then arranged to determine a global pose of the video camera, and consequently a global pose of the aerial platform,15 in the predetermined global coordinate system using the determined point correspondence and the knowledge of the global coordinates of the points in the two-dimensional view (image), for which the point correspondence to the first image has been determined, as provided from the textured 3D model.

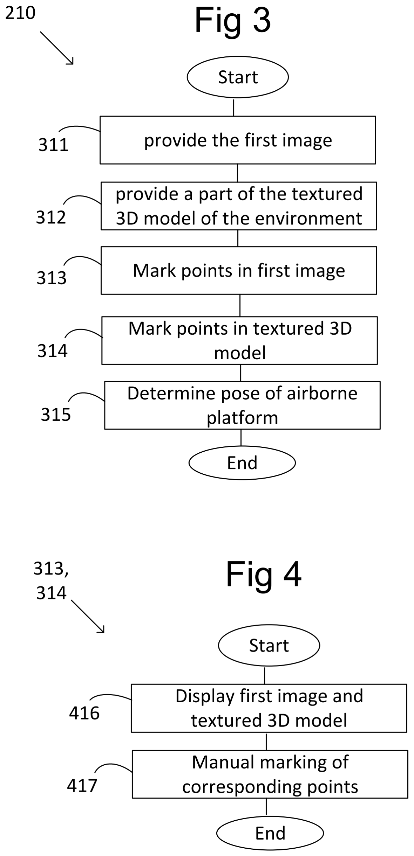

As is illustrated in figure 3, in an example, the determining 210 of an initial pose of the aerial platform 15 having an on-board video camera from a first image of the ground obtained using said on-board video camera 1 and from a textured 3D geo-referenced model of the environment comprises the following.

The first image of the ground is provided 311, and a part of the textured 3D model of the environment containing a 2D view part of the environment as displayed in the first image is provided 312.

At least three points, representing visible features in the first image are are identified and marked 313 in the first image. The purpose of the marking of points is to enable determination of point correspondence between the respectively marked point and corresponding points from the textured 3D model. For example four points in the first image are marked. The marking is for example made manually. The manual marking may be made using a pointing tool, such as a mouse or joystick, or the manual marking is made on a touchscreen.

Corresponding at least three points, for example four points, in the provided part of the textured 3D model of the environment are marked 314, wherein the marked points in the provided part of the textured 3D model comprises or are associated to georeferenced 3D positions. The purpose of the marking of points is thus to enable determination of point correspondence between the respectively marked point and the corresponding points from the first image. The marking is for example made manually. The manual marking may be made using a pointing tool, such as a mouse or joystick, or the manual marking is made on a touchscreen.

The processing device then determines 315 the pose of the aerial platform based on the at least three corresponding points in the first image and in the textured 3D model of the environment.

As also explained in relation to the determination 210 of the initial pose in relation to figure 2, processing device 600 is arranged to determine a global pose of the video camera, and consequently a global pose of the aerial platform,15 in the predetermined global coordinate system using the determined point correspondence and the knowledge of the global coordinates of the points in the two-dimensional view (image), for which the point correspondence to the first image has been determined, as provided from the textured 3D model.

In reality, it is the initial pose of the video camera onboard the aerial platform which is determined. As explained above, the spatial relation between the video camera and the aerial platform may be known.

Figure 4 illustrates that the marking of at least three points in the first image and the marking of corresponding at least three points in the provided part of the textured 3D model of the environment comprises displaying 416 the first image and a 2D view of the provided part of the 3D model, and manually marking 417 the at least three points in the first image and the corresponding at least three points in the provided part of the textured 3D model of the environment.

As illustrated in figure 2, the method 200 further comprises continuously determining 230 the pose of the aerial platform 15 from the determined initial pose and from continuously updated video camera images and the textured 3D model of the environment. In reality, it is the pose of the video camera on- board the aerial platform which is determined. The spatial relation between the video camera and the aerial platform may be known.

The term pose as used herein refers to position and attitude.

The term continuously in the context of the determination of a pose of the video camera on-board the aerial platform means that the pose is determined while the aircraft is moving. The updating frequency of the pose may be different for different applications and implementations.

In this example, the processing device 600 is configured to continuously compare the continuously updated video stream with the textured 3D model, to update the pose of the aerial platform 15 along the path 12 of the aerial platform 15. No additional metadata needs to be provided from the aerial platform itself 15. The video stream and the textured 3D model, wherein the latter acts as trusted reference work, is enough for providing a current global pose of the aerial platform, wherein the textured georeferenced 3D model acts as a reference for global positioning. The solution works on recorded video as well as on live video data.

However, as also mentioned before, it is pre-assumed that the field-of-view of the video camera is known. This information may be provided as a configuration parameter from any source or be actively provided by the aerial platform/video camera.

Potentially, for all video frames between the one (i.e. the first image) selected by the user and the latest video frame in the live feed, the system fast-forwards through the frames and updates the pose of the aerial platform 15 accordingly.

The functionality herein described for continuously updated the pose of the aerial platform 15 may be implemented as a navigation filter. The navigation filter is fed with the initial pose of the aerial platform 15. The initial pose forms a start state for the navigation filter. The navigation filter may also be fed with the continuously updated pose determined from the comparison between the video stream and the textured georeferenced 3D model. The continuously updated pose may be associated with a covariance matrix representing an uncertainty of the current pose.

In an extended implementation example, the navigation filter may also be fed with a current pose determined from visual odometry.

The navigation filter then keeps the navigation state (pose and potentially covariance matrix) up to date by fusing information from Visual Odometry and Visual Positioning, Visual Odometry uses consecutive video frames to estimate the pose for the aerial platform, and Visual Positioning compares the video frames to the textured georeferenced 3D model to also estimate the pose for the aerial platform. Both Visual Odometry and Visual Positioning may output covariance information to describe the uncertainty in their estimates for position and attitude. The navigation filter uses one or more of these covariances when updating the navigation state (i.e. pose and covariance matrix).

Use of Visual-Inertial Odometry will further enhance the performance. However, this means that the processing device 600 is fed with inertial measurements from an IMU 8 of the aerial platform 15.

The processing device continuously retrieves video frames from the live feed and keeps the navigation state updated and informs the user on its performance. Should the performance degrade to a point where a stable navigation state can no longer be established, the processing device will notify the user. Here, the user can re-initialize the system by returning to the step 210 of obtaining an initial pose.

The method may comprise initialising 220 a navigation filter for use in the continuous determining 230 of the pose, said initialisation comprises initialising the navigation filter with the initial pose.

When Visual-Inertial Odometry is used in the navigation filter, the initialising 220 may further comprises determining a gravity vector of the video camera based on the determined initial pose, and determining a relative rotation between the predetermined global coordinate system used for the camera and a IMU coordinate reference system, and initializing the navigation filter with information relating to the relative rotation between the predetermined global coordinate system used for the video camera and the IMU coordinate reference system. The determining of a relative rotation between the predetermined global coordinate system used for the camera and the IMU coordinate reference system may comprise obtaining angular velocity measurement data from the IMU and determining the relative rotation based on the determined gravity vector and based on the angular velocity measurement data provided from the IMU.

When visual odometry is used in the navigation filter, initialising 220 may further comprises determining a second point correspondence between an additional image captured by the video camera (1) at a second time and the textured 3D model of an environment containing 3D coordinates in the predetermined global coordinate system, determining a second global pose of the video camera in the predetermined global coordinate system using the additional determined point correspondence, and estimating a relative translation and rotation between the first and additional images in a scale of the predetermined global coordinate system from a difference between the first and additional global poses, said estimate indicating the scale for movement of the video camera as determined by the predetermined global coordinate system, and initializing the navigation filter with the scale of the predetermined global coordinate system using the estimated relative translation and rotation.

The method further comprises receiving 240 a request for determining a geographical coordinate for a position on the ground, said request comprising a second image from the continuously updated video images in which second image a location of the position on the ground is marked.

Thus, when the user identifies a feature of interest for which he wants to extract a coordinate, the user selects a frame from the video stream presented on the display and clicks on said feature in the frame.

The method comprises further determining 250 the geographical coordinate of the marked position on the ground based on a determined pose of the aerial platform at the time of capture the second image and based on the textured 3D model of the environment.

Thus, a feature for which the coordinate is extracted is identified in a frame taken from a video stream.

The determining of the geographical coordinate of the marked position may comprise performing an intersection calculation with the textured 3D model, starting from the (sub)pixel the user clicked on, and using position and attitude details from the navigation state (pose) associated with the selected video frame.

Potentially, a georegistration may be made prior to performing the intersection with the textured 3D model.

The determining of the geographical coordinate of the marked position results in a 3D coordinate that is presented to the user. The result is presented may be presented in textual form. A symbol may be added to the textured 3D model, or presented view, indicating where the 3D coordinate is located.

The coordinate which is presented to the user may be converted to and represented in a different coordinate system than the "predetermined global coordinate system" of the 3D model, and the coordinate system used for the calculations as described herein.

With this solution, the coordinate can be extracted in a GNSS-denied environment, where an aerial platform does not retrieve reliable positioning from a GNSS-system.

Potentially, uncertainty information for the extracted coordinate is presented to the user. The uncertainty information may comprise an uncertainty in the pose of the aerial platform at the time of capture of the second image. Instead, or in addition thereto, the uncertainty may relate to an uncertainty in georegistration of the second image to the 3D model. Alternatively, or in addition thereto, the uncertainty may relate to an uncertainty in the marking of the position in the second image. Alternatively, or in addition thereto, the uncertainty may relate to an uncertainty in the textured 3D model at the location of the marking of the position in the second image.

In an extended version, display of the marking in the second image as mapped to the textured 3D model may be provided 260 to the user for manual review of the determined coordinate.

Characteristically the provided display allows for user interaction with the textured 3D model for assessment of the extracted 3D coordinate from different angles, to validate that the coordinate is reasonable for the feature of interest.

Changes in the environment from what the textured 3D model represents to what is depicted in the video stream may cause the 3D coordinate to not represent where the feature is actually located. An example of this is if a building has been built since the textured 3D model was created, and the feature of interest is in the vicinity of the building.

The solution as presented herein only uses the video stream from the aerial platform. No software needs to be installed on the aerial platform and no other changes needs to made to the aerial platform. This means that any aerial platform from which the video stream can be retrieved on an external processing device is compatible with the system, even though it is pre-assumed that the field-of-view of the video camera and potentially potential lens calibration parameters are known.

The external processing device may for example be a laptop, tablet, phone or any other suitable equipment.

The solution is designed to work in a GNSS-denied environment, utilizing only video information to function.

In an option, where visual-inertial odometry is applied, also IMU measurements of aerial platform are provided to the processing device and used.

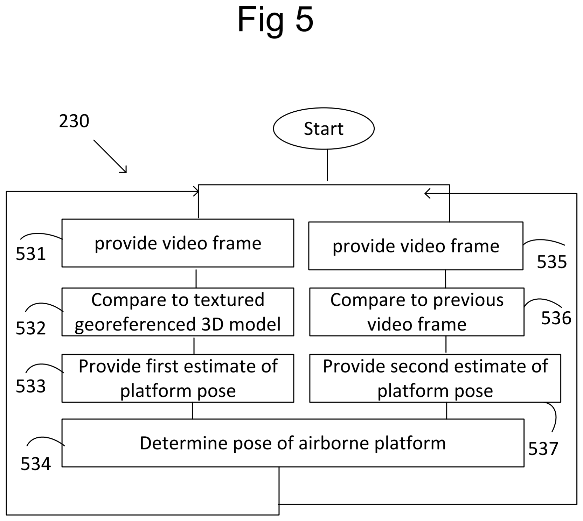

In figure 5, an example of operation of a navigation filter for continuously determining the pose of the aerial platform is schematically illustrated. When using the navigation filter, it may be initialised using at least some of the data as explained in relation to initialisation step 220.

The continuous determining 230 of the pose of the aerial platform comprises providing a first estimate 533 of the pose of the aerial platform based on a previously determined pose 534, based on a provided 532 current video frame and based on comparison 533 of the provided current video frame with the textured 3D model, wherein the latter acts as trusted reference. Accordingly, the current video frame is provided 531, and compared 532 to the textured 3D model and a first estimate 533 of the current aerial platform pose is obtained based on the comparison and previously determined pose.

Further, the continuous determining 230 of the pose comprises providing 537 a second estimate of the pose of the aerial platform from visual odometry comparing a provided 535 video frame with a previously provided 536 video frame.

In an example, the first estimate 533 is updated with a first updating frequency. The second estimate 537 is updated with a second updating frequency. The first updating frequency may be higher than the second updating frequency.

The continuous determining 230 of the pose may comprises using information also from an Inertial Measurement Unit, IMU, on-board said aerial platform.

In figure 6, examples of configurations a processing device 600 arranged to provide a video stream from at least one video camera 1 of an aerial platform 15 are illustrated. The aerial platform may for example be an aerial platform 15 as exemplified in in the description relating to figure 1.

The at least one video camera 1 may comprise a plurality of cameras. The at least one video camera may comprise at least one video camera from the group comprising
- at least one camera capable of detection in the visible wavelength-range.
- at least one infrared camera,
- at least one ultraviolet camera,
- at least one a multispectral camera, and
- at least one hyperspectral camera.

The at least one video camera 1 has its field of view. The field of view is known,

The processing device 600 is in an example arranged at a remote location in relation to the aerial platform, in which remote location the user is located. As also discussed in relation to figure 1, at least in some examples, the only information the external processing device 600 requires is the video stream. The video stream may be transmitted from the aerial platform as a live video feed. The video stream may be transmitted from the aerial platform 15 to the processing device with delay. The video stream may be transmitted from the aerial platform 15 to the external processing device compressed in time, i.e. for example a twenty minute long video sequence may be transmitted during a substantially shorter time.

Instead of being transmitted from the aerial platform to the external processing device, for example in (near) real time during operation of the aerial platform, the video stream may be stored in the aerial platform 15 and loaded from the aerial platform into the processing device after a flight.

Irrespectively how the video stream is provided from the video camera to the processing device, a live video feed or recorded video stream can be retrieved from the aerial platform 15 on the external processing device and shown to a user via a display 2 of the processing device. The subsequent operations are carried out on the external processing device, unless otherwise stated. No additional hardware or software needs to be installed on the aerial platform itself. No additional telemetry data is required.

In an example implementation, the processing device 600 is implemented on one or more separate devices as exemplified herein, such a laptop.

The processing device 600 comprises or has access to a memory 3 storing a textured georeferenced 3D model of an environment.

The textured 3D model contains three-dimensional, preferably geo-referenced, information of the environment. The textured 3D model could be any kind of 3D model known to those skilled in the art with associated texture information. In an embodiment, the textured 3D model is represented as a textured mesh. In another embodiment, the textured 3D model is represented as a textured surface representation. In yet another embodiment, the textured 3D model is represented as a textured voxel representation. In an additional embodiment, the textured 3D model is a point cloud with associated texture information. For example, the textured 3D model is a represented as 3D Gaussians with associated texture information In still another embodiment the three-dimensional geo-referenced information of the environment is represented in such a way that a textured 3D model or a 3D map of the environment could be constructed based on the information above. In one example the 3D map is a triangular irregular network (tin)-based mesh draped with textures.

Irrespectively of how the textured 3D model is obtained, the 3D model includes a texture, i.e. is draped with a texture, or is associated with texture information. The texture/texture information may be provided from photographs of locations corresponding to the coordinates of the 3D model. The photographs may be photographs used in building the 3D aspects of the textured 3D model or photographs captured before or after building the 3D aspects of the textured 3D model. The photographs may have been processed before being used as texture/texture information of the 3D model.

In some examples, a positional or mesh uncertainty is associated to at least some of the nodes/surfaces/edges of the mesh. The mesh uncertainty associated to each respective node/surface/edge represents the uncertainty at that specific point of the model.

The processing device 600 comprises further one or more processors 4. The one or more processors 4 may comprise hardware and software, said software comprising instructions to execute the functionality as presented herein.

The one or more processors comprises a module for initialisation 5. The module for initialisation is arranged to determine an initial pose of the aerial platform 15. The module for initialisation is for example arranged to execute software instructions for determining the initial pose.

The module for initialisation 5 is arranged to obtain point correspondence between the first image and a corresponding part of the textured 3D model of the environment containing 3D coordinates given in the predetermined global coordinate system. The point correspondence may for example be obtained for three or more points in the image captured by the video camera 1 and a two-dimensional image as provided form the textured 3D model.

The module for initialisation 5 is arranged to determine the initial pose for example as explained in relation to figures 2-4. Characteristically, the module for initialisation is operatively connected to the display 2 and user input means 6 for use in determining the initial pose.

Further, the at least one processor 4 is arranged to continuously determined a pose of the aerial platform 15. The determined poses of the aerial platform may be stored in a data memory 9. The data memory 9 may also or instead store the video stream provided from the video camera of the aerial platform 15. In the data memory, the respective determined pose may be stored together with the corresponding frame(s) of the video stream which were used in the determination of the respective pose.

Further, the one or more processors 4 may be implemented in a navigation filter 7. The navigation filter is arranged to continuously output the determined pose. The navigation filter may be arranged to continuously output a navigation state comprising the pose of the aerial platform 15, and also possibly an uncertainty associated with said determined pose. When a navigation filter is used, the module for initialisation 5 provides the determined initial pose to the navigation filter for use in initialisation of the navigation filter.

The module for initialization is for example arranged to execute software instructions for obtaining the further initialization data for initialization of the navigation filter.

The initialisation module 5 may also be arranged to obtain further initialisation data to the navigation filter 7. The initialisation module 5 is arranged to receive images captured by the video camera. The module may further be arranged to receive data from an IMU 8 of the aerial platform 15.

The module for initialisation 5 may be arranged to determine a gravity vector of the video camera based on the determined initial global pose. The gravity vector can be derived from the global pose though characteristics of the predetermined global coordinate system of the 3D model. The determination of the gravity vector may for example involve determining an angle between the pose and the gravitational field.

The module for initialisation 5 may further be arranged to determine a relative rotation between the predetermined global coordinate system used for the camera, in which gravity represents one dimension, and a IMU coordinate reference system, for use in initialization of the visual-inertial odometry system of the navigation filter.

In detail, the module for initialisation 5 may be arranged to, for providing initialization data, obtain angular velocity measurement data as received from the IMU 8 and determine the relative rotation between the camera 1 and the IMU based on the determined gravity vector and based on the angular velocity measurement data provided from the IMU.

The navigation filter 7 is arranged to estimate the determined a state of the aerial platform. The state includes a pose and potentially a velocity. The navigation filter may use as a base any data provided by the IMU 8 of the aerial platform 15. IMU based navigation filters are known in the art and comprises for example Kalman filters or other technology. The navigation filter may be used to keep track of the platform's current position using a process called dead reckoning. However, prior art navigation filters have a tendency that the calculated position will differ from the real position more and more with time. This is due to the fact that errors in the navigation filter will add up. Therefore, the longer the time a vehicle navigates with an IMU and navigation filter only, the bigger the uncertainty about the actual real position of that platform. As the navigation filter as described herein uses the textured 3D model as a reference or base, this problem does not occur in the solution as presented herein as long as the processor is capable of comparing the video stream to the textured 3D model.

The module for initialisation 5 may be arranged to feed information relating to the relative rotation between the predetermined global coordinate system used for the camera and the IMU coordinate reference system to the navigation filter 5 for initializing of the navigation filter.

Instead, or in addition to, the initialisation module 5 may be arranged to use the information relating to the relative rotation between the predetermined global coordinate system used for the camera and the IMU coordinate reference system, for estimating a scale for movement of the camera 1 for use in initialization of the navigation filter.

The initialisation module 5 is then configured to, in addition to determining a first correspondence between the first image captured by the camera at a first time and the textured 3D model of an environment containing 3D coordinates in a predetermined global coordinate system, also determine a second point correspondence between an additional image captured by the camera at a second time and the textured 3D model of an environment containing 3D coordinates in the predetermined global coordinate system. The initialisation module 5 is further arranged to estimate a relative translation and rotation between the first and second images in a scale of the predetermined global coordinate system using the determined first and second point correspondences, said estimate indicating the scale for movement of the camera 1 for use in initialization of the navigation filter 5. Note that the first time is different than the second time. In practice, a first global pose of the camera is determined in the predetermined global coordinate system using the first determined point correspondence, and a second global pose of the camera is determined in the predetermined global coordinate system using the second determined point correspondence. The relative translation and rotation between the first and additional mages in a scale of the predetermined global coordinate system is then estimated from difference between the second global poses, said estimate indicating the scale for movement of the camera for use in initialization of the navigation filter.

The initialisation module 5 may be configured to feed information relating to said estimate indicating the scale for movement of the camera 1 to the navigation filter 7 for initializing of the navigation filter.

The controller 16 may be provided for operator control of a controller 17 for platform movement control of the aerial platform 15. In the context of the present disclosure, the controller may be provided for controlling the aerial platform 15 during the initialisation. For example, the controller 16 may be used by the operator to control the aerial platform to the stable state as discussed herein.

Further, the controller 16 may be operated by the operator to control manoeuvre of the platform, such as a turn and/or acceleration/retardation of the platform. In this context, the initialisation module 5 may be arranged for simultaneously obtaining measurement data from the IMU for use in initialisation of the navigation filter 7.

The at least one processor 4 may comprise a visual odometry module 18. The visual odometry module is arranged to provide an estimate of where the aerial platform is and how the platform is moving. In practice, the visual odometry module 18 is arranged to use consecutive video frames to estimate position and attitude for the aerial platform 15.

The at least one processor further comprises a module 19 for visual positioning. The module 19 for visual positioning compares the video frames to the textured georeferenced 3D model to estimate position and attitude for the aerial platform.

Both Visual Odometry and Visual Positioning may output covariance information to describe the uncertainty in their estimates for position and attitude. The navigation filter 7 then uses these covariances when updating the navigation state (i.e. pose and covariance matrix).

Use of a Visual-Inertial Odometry module 20 will further enhance the performance. However, this means that the processing device is fed with inertial measurements from an IMU of the aerial platform 15. In Visual Inertial Odometry, Visual Odometry from camera images are combined with Inertial Odometry from an inertial measurement unit, IMU. In Visual-Inertial Odometry, the video camera 1 and the IMU 8 should be calibrated with each other.

The navigation filter 7 during operations combine the output from the module 19 for visual positioning and/or the output from the module 18 for visual odometry and/or the output from the module for visual-inertial odometry 20 to continuously determine the pose of the aerial platform 15. The different modules 18, 19, 20 may update their outputs to the navigation filter at different updating frequencies. For example, visual positioning is characteristically more computationally demanding than visual odometry and can therefore be selected to be updated at a lower frequency than the estimated poses (and possibly associated covariance matrix representing an uncertainty) of visual odometry.

Thus, the processing device 600 continuously retrieves video frames from a live video feed or recorded video stream and keeps the navigation state updated. The processing device may inform the user on its performance. Should the performance degrade to a point where a stable navigation state can no longer be established, the processing device is in some examples arranged to notify the user. Here, the user can re-initialize the system by returning to the step 210 of obtaining an initial pose.

As the continuous determination of the pose provides detailed input data comprising information related to pitch angle, roll angle, yaw angle and three-dimensional position of the platform, and thus related to pitch angle, roll angle, yaw angle and three-dimensional position of camera of the platform, it is possible to provide a two-dimensional image from the textured 3D model which accurately maps images captured by the camera.

The two-dimensional image from the 3D model may be provided in such a way that it is projected onto the field of view of the camera, where it is assumed that the platform has its pitch angle, roll angle, yaw angle and three-dimensional position according to the input data.

However, it is not necessary to provide a common view between the video stream and the 2D view for presentation of the textured 3D model. The important thing is that a two-dimensional image can be provided from the 3D model, which has visible features which are also visible in an image captured by the camera.

The at least one processor 4 comprises further a module 21 for providing a geographical coordinate for a location as marked in a second, user selected image or frame in the video stream.

Thus, the user requests via the user input means 6 determination of a geographical coordinate for a position on the ground, said request comprising a second image from the continuously updated video images in which second image a location of the position on the ground is marked.

Thus, when the user identifies a feature of interest for which he/she wants to extract a coordinate, the user selects a frame from the video stream presented on the display and clicks on said feature in the frame.

The module 21 for providing a geographical coordinate then is arranged to determine the geographical coordinate of the marked position on the ground based on a determined pose of the aerial platform 15 at the time of capture the second image and based on the textured 3D model of the environment.

Thus, a feature for which the coordinate is extracted is identified in a frame taken from a video stream.

The determining of the geographical coordinate of the marked position may comprise performing an intersection calculation with the textured 3D model, starting from the (sub)pixel the user clicked on, and using position and attitude details from the navigation state (pose) associated with the selected video frame.

Potentially, a georegistration may be made prior to performing the intersection with the textured 3D model.

The determining of the geographical coordinate of the marked position results in a 3D coordinate that is presented to the user. The result is presented may be presented in textual form. A symbol may be added to the textured 3D model, or presented view, indicating where the 3D coordinate is located.

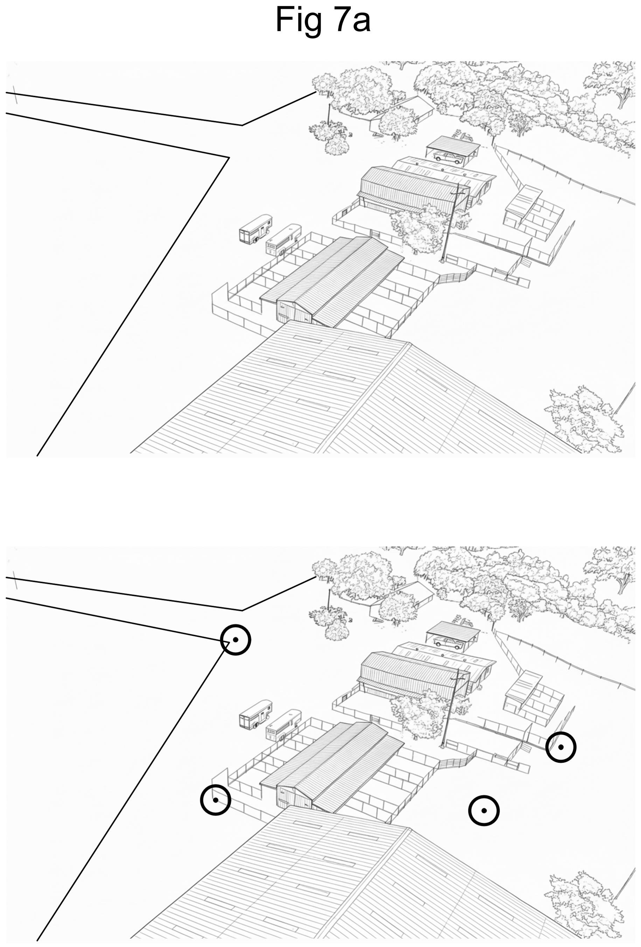

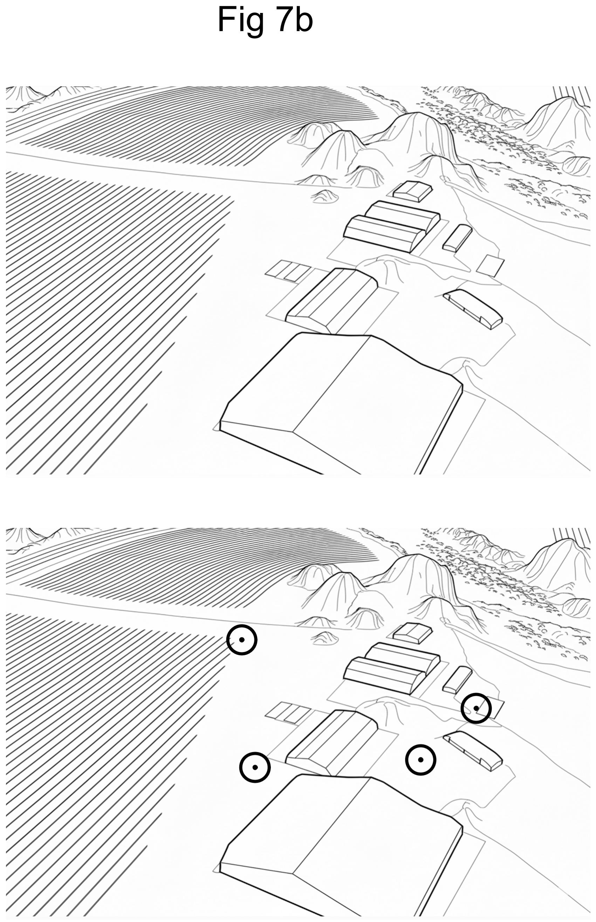

Figures 7a and 7b illustrate an example of display views for use in determining point correspondence.

In 7a, a first image is from a video stream displayed. Circles represent parts of the sensor image which are intended for use in determining point correspondence with a textured 3D model.

In figure 7b, a part of the textured 3D model is displayed. Circles represent parts of the textured 3D model which used in determining point correspondence with the sensor image.

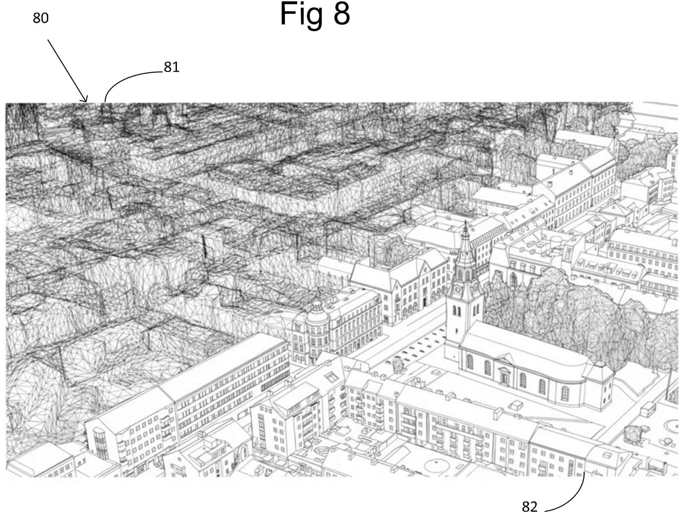

Figure 8 illustrates an example of a textured 3D model 80 of an environment containing 3D coordinates given in a predetermined global coordinate system. The textured 3D model may be stored in a memory 3 of the processing device. This textured 3D model 80 may be used in the disclosure as presented herein.

The lower right part 82 the 3D model 80 comprises geocoded reference data and texture information while the upper left part comprises only geocoded reference data. After generation of the geocoded reference data the 3D map 80 looks like the upper left part 81 of the 3D map 80. The texture information is then applied by for example using the texture of at least some of the 2D images or to create the 3D model 3D as is shown in the lower right part 82.

The textured 3D model may be formed based on at least partly overlapping images comprises performing bundle adjustment. Given a set of images depicting a number of 3D points from different viewpoints, bundle adjustment can be defined as the problem of simultaneously refining the 3D coordinates describing the scene geometry as well as the parameters of the relative motion and the optical characteristics of the camera(s) employed to acquire the images, according to an optimality criterion involving the corresponding image projections of all points.

There are a different ways of representing textured 3D model. The textured 3D model may be represented as a mesh, as a surface representation, or as a voxel representation.

The textured 3D model may be provided based on other information than camera images. For example, the 3D map representation may be provided based on any type of distance measurements. For example, example LIDAR, sonar, distance measurement using structured light and/or radar can be used instead of or in addition to measurements based on camera images. The camera for example can be a camera for visual light or an IR camera.

For example, processing may be performed to provide the results of a plurality of distance measurements to each area from a plurality of geographically known positions using a distance determining device. The 3D model is then provided for each area based on the plurality of distance measurements.

In the illustrated example, the 3D model is represented as a mesh. A processor is arranged to form the mesh based on the map representation specified in the three geographical dimensions. Further, texture information from the original images may be associated to the surfaces of the mesh. In detail, the processor is arranged to form the mesh by forming nodes interconnected by edges forming surfaces defined by the edges, wherein each node is associated to a three-dimensional geocoded reference data in a geographical coordinate system.

## Claims

1. A method (200) for obtaining a geographical coordinate for a position on the ground, said method comprising
determining (210) an initial pose of a video camera on-board an aerial platform, wherein the initial pose is determined from at least three identified visual points in a first image of the ground obtained using said on-board video camera and corresponding visual points from a textured 3D geo-referenced model of the environment,
continuously determining (230) a pose of the video camera on-board the aerial platform starting from the determined initial pose and from continuously updated video camera images and the textured 3D model of the environment,
receiving (240) a request for determining a geographical coordinate for a position on the ground, said request comprising a second image from the continuously updated video images in which second image a location of the position on the ground is indicated, and
determining (250) a geographical coordinate of the indicated position on the ground based on a determined pose of the video camera on-board the aerial platform at the time of capture the second image, based on the second image and based on the textured 3D model of the environment.

2. The method according to claim 1, wherein the determining (210) of the initial pose aerial platform(15) comprises
providing (311) the first image of the ground,
providing (312) a part of the textured 3D model of the environment containing a part of the environment as displayed in the first image,
marking (313) said least three visual points in the first image
marking (314) corresponding at least three visual points in the provided part of the textured 3D model of the environment, wherein the marked points in the provided part of the textured 3D model are associated to georeferenced 3D coordinates, and
determining (315) the pose of the video camera of the on-board aerial platform in the georeferenced coordinate system of the textured 3D model based on the at least three corresponding points in the first image and the provided part of the textured 3D model of the environment.

3. The method according to claim 2, wherein the marking of at least three visual points in the first image and the marking of corresponding at least three visual points in the provided part of the textured 3D model of the environment comprises displaying (416) the first image and a 2D view of the provided part of the 3D model, and manually marking the at least three visual points in the first image and the corresponding at least three visual points in the provided part of the textured 3D model of the environment.

4. The method according to any of the preceding claims, wherein the continuous determining (230) of the pose aerial platform comprises to determine the pose based on a previously determined pose, a current video frame and the textured 3D model, wherein the latter acts as trusted reference, wherein optionally the determination of the pose comprises determining an uncertainty in the determination of the pose.

5. The method according to claim 4, wherein the continuous determining (230) of the pose comprises determining the pose from visual odometry and/ or wherein the continuous determining (230) of the pose comprises determining the pose from matching of the current frame with the textured 3D model,
wherein optionally the determination of the pose from visual odometry also comprises determining an uncertainty in the determination of the pose and/or wherein optionally the continuous determining (230) of the pose from matching of the current frame with the textured 3D model comprises determining an uncertainty in the determination of the pose.

6. The method according to claim 5, wherein the continuous determining (230) of the pose comprises determining the pose from visual odometry with a first updating frequency and wherein the continuous determining (230) of the pose comprises determining the pose from matching of the current frame with the textured 3D model with a second updating frequency.

7. The method according to claim 6, wherein the first updating frequency is higher than the second updating frequency.

8. The method according to any of the proceeding claims, wherein the continuous determining (230) of the pose comprises determining the pose from Visual- Inertial odometry using information also from an Inertial Measurement Unit, IMU, on-board said aerial platform (15), wherein optionally the determination of the pose from Visual- Inertial odometry also comprises determining an uncertainty in the determination of the pose.

9. The method according to any of the preceding claims, further comprising initialising (220) a navigation filter for use in continuous determining (230) of the pose, said initialisation comprises initialising the navigation filter with the initial pose.

10. The method according to claim 9, wherein the initialising (220) further comprises:
determining a gravity vector of the video camera based on the determined initial pose, and
determining a relative rotation between the predetermined global coordinate system used for the camera and a IMU coordinate reference system, and initializing the navigation filter with information relating to the relative rotation between the predetermined global coordinate system used for the video camera and the IMU coordinate reference system.

11. The method according to claim 10, wherein the determining of a relative rotation between the predetermined global coordinate system used for the camera and the IMU coordinate reference system comprises
obtaining (206) angular velocity measurement data from the IMU and
determining (207) the relative rotation based on the determined gravity vector and based on the angular velocity measurement data provided from the IMU.

12. The method according to any of the claims 9-11, wherein the navigation filter for use in continuous determining (230) of the pose also determines an uncertainty in the determination of the pose.

13. The method according to any of the claims 9-12, wherein initialising (220) further comprises determining (208) a second point correspondence between an additional image captured by the video camera (1) at a second time and the textured 3D model of an environment containing 3D coordinates in the predetermined global coordinate system,
determining (209) a second global pose of the camera in the predetermined global coordinate system using the second determined point correspondence.
estimating (210) a relative translation and rotation between the first and additional images in a scale of the predetermined global coordinate system from a difference between the first and second global poses, said estimate indicating the scale for movement of the camera as determined by the predetermined global coordinate system, and
initializing the navigation filter with the scale of the predetermined global coordinate system using the estimated relative translation and rotation.

14. The method according to any of the preceding claims, wherein the predetermined global coordinate system is a geographic coordinate system and wherein the determined global pose of the camera given in the geographic coordinate system is provided to a navigation filter for use in initialization of the filter with a geographic coordinate.

15. The method according to any of the preceding claims, wherein in addition to determining (250) the geographical coordinate of the indicated position on the ground, also an uncertainty associated with the determined geographical coordinate is determined.

16. A processing device (600) for obtaining a geographical coordinate for a position on the ground, said processing device comprising
at least one processor (4) arranged to
determine an initial pose of a video camera on-board an aerial platform, wherein the initial pose is determined from at least three identified visual points in a first image of the ground obtained using said on-board video camera and corresponding visual points from a textured 3D geo-referenced model of the environment,
continuously determine a pose of the video camera on-board the aerial platform starting from the determined initial pose and from continuously updated video camera images and the textured 3D model of the environment,
receiving a request for determining a geographical coordinate for a position on the ground, said request comprising a second image from the continuously updated video images in which second image a location of the position on the ground is indicated, and
determining the geographical coordinate of the indicated position on the ground based on a determined pose of the video camera on-board the aerial platform at the time of capture the second image, based on the second image and based on the textured 3D model of the environment.

17. The processing device (600) according to claim 16, wherein the processing device is a laptop computer, tablet, phone or other suitable equipment arranged to receive a video stream originating from the video camera on-board the aerial platform.
